# NEUE EUROPÄISCHE PATENTSCHRIFT

(11) **EP 3 296 107 B2**
(45) Veröffentlichungstag und Bekanntmachung des Hinweises auf die Entscheidung über den Einspruch: **26.03.2025**
(45) Hinweis auf die Patenterteilung: 24.10.2018
(21) Anmeldenummer: 16189038.9
(22) Anmeldetag: 15.09.2016
(51) Int. Cl.: B32B 37/26, B32B 38/06

(54) **VERFAHREN ZUR HERSTELLUNG EINES HOCHDRUCKLAMINATS**
METHOD FOR PRODUCING A HIGH PRESSURE LAMINATE
PROCÉDÉ DE FABRICATION D'UN LAMINÉ HAUTE PRESSION

(43) Veröffentlichungstag der Anmeldung: 21.03.2018
(73) Patentinhaber: Flooring Technologies Ltd., Kalkara SCM 1001 (MT)
(72) Erfinder: Stiewe, Bernd, 33039 Nieheim (DE); Prof. Dr. Hasch, Joachim, 10317 Berlin (DE)
(74) Vertreter: Rehmann, Thorsten

(56) Entgegenhaltungen:
- EP-A1- 2 179 863
- EP-A1- 3 015 282
- WO-A1-90/14226
- US-A- 3 373 068
- US-A- 3 700 537
- US-A- 3 723 220
- US-A1- 2009 081 413
- DATABASE WPI Week 201377, Derwent World Patents Index; AN 2013-V46296, XP002768279

## Beschreibung

Die Erfindung betrifft ein Verfahren zur Herstellung eines Hochdrucklaminats (HPL = High Pressure Laminate) bestehend aus einem übereinander geschichteten Aufbau aus harzgetränkten Papieren, von denen mindestens ein Papier ein Dekor aufweist und der Aufbau in einer Presse zu einem Laminat gewünschter Dicke verpresst wird.

Ein solches Verfahren ist beispielsweise aus der DE 698 19 549 T2 und der WO90/14226 A1 Hochdrucklaminate werden unter anderem zur Beschichtung von Holzwerkstoffplatten im Möbelbau. Je nach Abriebfestigkeit können sie als Arbeitsplatten oder Tischplatten eingesetzt werden. Die beschichteten Holzwerkstoffplatten können auch zu Paneelen aufgeteilt und dann als Wand-, Decken- oder Fußbodenbelag verwendet werden. Wenn in die Oberseite des Dekors eine Struktur eingeprägt werden soll, ist es notwendig, das Pressblech, mit dem das Laminat verpresst wird, entsprechend zu gravieren. Dies ist aufwendig und kostenintensiv. Um wirtschaftlich produzieren zu können, muss eine entsprechend hohe Menge HPL mit derselben Struktur versehen werden, damit sich das gravierte Pressblech auch amortisiert. Zur Einstellung eines Glanzgrades des gepressten Laminats muss das Pressblech entsprechend oberflächenbehandelt sein. Eine hochglänzende Oberfläche erfordert ein poliertes Pressblech, eine matte Oberfläche eine dem Mattierungsgrad entsprechend raue Oberfläche des Pressblechs. Die Einstellung unterschiedlicher Glanzgrade erfordert die Anfertigung entsprechend vieler Pressbleche. Kleine Losgrößen sind deshalb nur in den seltensten Fällen zu realisieren.

Hiervon ausgehend liegt der Erfindung die Aufgabe zugrunde, das vorgenannte Verfahren in wirtschaftlicher Hinsicht zu verbessern, sodass kleine Losgrößen gefertigt werden können, wobei eine schnelle Umrüstung der Fertigungsanlage gewährleistet werden soll.

Zur Problemlösung zeichnet sich ein gattungsgemäßes Verfahren dadurch aus, dass unter Verwendung eines Strukturgebers bestehend aus einem Trägermaterial mit einer darauf im 3D-Druck aufgebrachten positiven Struktur in die oberste Papierlage eine negative Struktur eingepresst wird und während des Verpressens zwischen dem Strukturgeber und der obersten Papierlage eine Folie zur Einstellung des Glanzgrades des gepressten Laminats angeordnet wird, die nach dem Verpressen mit dem Strukturgeber entfernt wird.

Dadurch, dass die Struktur im 3D-Druck auf das Trägermaterial aufgebracht wird, können unterschiedliche Strukturen kostengünstig hergestellt werden. Durch die Vorsehung der Folie kann nicht nur auf einfache Art und Weise der Glanzgrad des gepressten Laminats eingestellt werden, sondern diese Folie verhindert außerdem wirksam, dass beim Verpressen das Harz der Papiere zwischen die positive Struktur fließt und diese zusetzt. Weil der 3D-Druck kostengünstig ist und sehr rasch umgesetzt werden kann, ist es sehr einfach, die Struktur zu wechseln. Auch die Folie zur Einstellung des Glanzgrades kann rasch gewechselt werden, sodass kleine Losgrößen bis hin zur Losgröße 1 möglich sind.

Damit wird es beispielsweise möglich, dass ein Kunde sich ein bestimmtes Dekor aussucht, innerhalb weniger Minuten eine zu dem Dekor passende Struktur auf das Trägermaterial aufgedruckt wird, eine entsprechende Folie mit dem gewünschten Glanzgrad ausgewählt wird und ein HPL (beispielsweise als Prototyp) gepresst wird, zu dem der Kunde unmittelbar entscheiden kann, ob es seinem Wunsch entspricht, und danach kann die Serienfertigung kurzfristig beginnen.

Die Folie besteht vorzugsweise aus Polypropylen und weist auf ihre dem Aufbau zugewandten Seite eine Beschichtung aus Silikon auf. Durch die Silikonbeschichtung wird wirksam verhindert, dass das Harz aus den Papieren an der Folie haftet.

Wenn der Strukturgeber so dünn ist, dass er auf eine Rolle aufgewickelt werden kann, ist es möglich, die Herstellung des Hochdrucklaminats in einer Contipresse vorzunehmen. Der Strukturgeber ist vorzugsweise eine Metall- oder Kunststofffolie oder eine Papier- oder HPL-Bahn.

Vorzugsweise korrespondiert die eingepresste Struktur zu dem Dekor, das insbesondere vorzugsweise ein Holzdekor, ein Stein- oder Fliesendekor ist. Auch Phantasiedekore sind denkbar.

Das Dekor (bei einem Holzdekor seine Maserung) wird vorzugsweise von einem Scanner gescannt, der mit einem Computer verbunden ist, der einen 3D-Drucker steuert. Die Struktur des Dekors (bei einem Holzdekor also seine Maserung einschließlich der Astlöcher usw.) wird dadurch 1:1 auf das Trägermaterial aufgedruckt, sodass eine sogenannte "Synchronpore" einfach erzeugt werden kann, bei der die Struktur und die Maserung passgenau übereinstimmen.

Mit Hilfe einer Zeichnung soll ein Ausführungsbeispiel der Erfindung nachfolgend näher beschrieben werden.

Es zeigen:

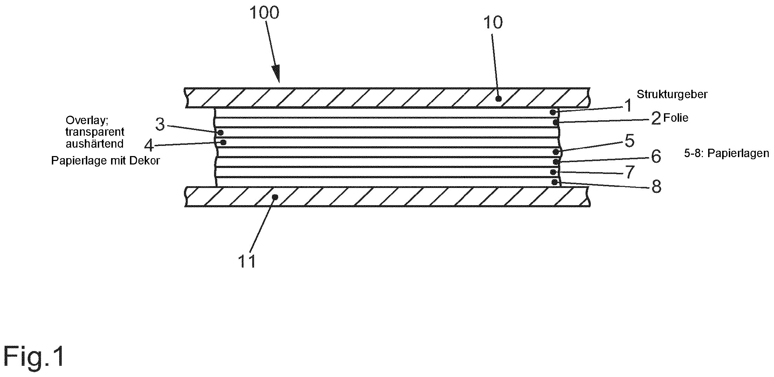

- Figur 1 -: den schematischen Aufbau eines aus mehreren Lagen in einer Presse zu verpressenden Laminats;

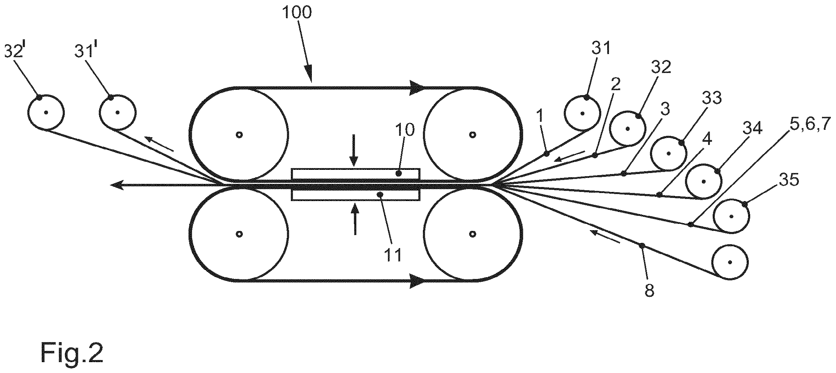

- Figur 2 -: die schematische Darstellung einer Contipresse in Seitenansicht;

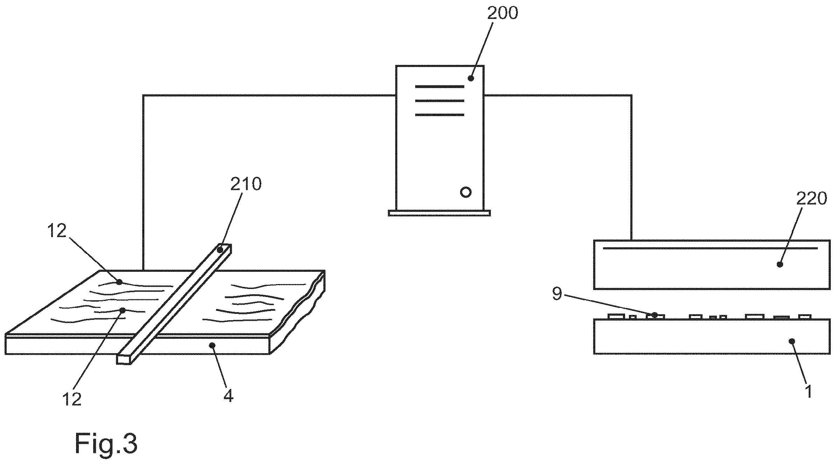

- Figur 3 -: eine schematische Darstellung der Verbindung zwischen Computer, Scanner und Drucker.

Der Laminataufbau besteht aus dem Kern aus drei harzgetränkten Kraftpapieren 5, 6, 7 dem darauf aufgelegten Dekorpapier 4 und dem darauf aufliegenden Overlay 3. An der Unterseite ist ein Gegenzug 8 vorgesehen, durch den eine Schüsselung des Laminats nach dem Verpressen verhindert wird. In der Presse mit der oberen Pressplatte 10 und der unteren Pressplatte 11 wird dieser Aufbau aus harzgetränkten Papieren 3, 4, 5, 6, 7, 8 zu einem Hochdrucklaminat gewünschter Dicke verpresst. Beim Verpressen schmelzen die Harze in den Papieren 3, 4, 5, 6, 7, 8 auf und verbinden sich miteinander. Über einen Strukturgeber 1 aus einer Metallfolie oder einer Papierbahn wird in das Overlay 3 beim Verpressen eine negative, also in Richtung des Kernes 5, 6, 7 gerichtete Struktur eingeprägt. Hierzu ist auf den Strukturgeber 1 mittels 3D-Druckes die Struktur 9 positiv aufgedruckt. Um den Glanzgrad des gepressten Laminates einstellen zu können und gleichzeitig zu vermeiden, dass sich das im Overlay 3 aufschmelzende Harz in die Strukturen des Strukturgebers 1 fließt und diesen zusetzt, ist zwischen dem Strukturgeber 1 und dem Overlay 3 eine sogenannte Release-Folie 2 eingelegt, über die auch der Glanzgrad des gepressten Laminats einstellbar ist. Hat die Folie 2 eine raue Oberfläche ist das gepresste Laminat matt, hat sie eine sehr glatte Oberfläche, ist das gepresste Laminat hochglänzend. Die Oberflächenrauigkeit bestimmt den Glanzgrad des Laminats.

Der Strukturgeber 1 ist eine so dünne Folie, dass er auf eine Rolle 31 aufgerollt werden kann. Auch die Folie 2 kann auf eine Rolle 32 aufgerollt werden. Sie besteht vorzugsweise aus Polypropylen und ist an ihrer dem Overlay 3 zugewandten Seite mit Silikon beschichtet. Auch das Overlay 3 und das Dekorpapier 4 können auf einer Rolle 33, 34 aufgerollt sein, die Kraftpapiere 5, 6, 7 auf einer Rolle 35.

Die Presse 100 kann eine Kurztakt-Presse oder eine Contipresse sein. Nach dem Verpressen werden der Strukturgeber 1 und die Folie 2 vom Laminat entfernt. Bei einer Contipresse werden sie auf je eine nachgeordneten Rolle 31', 32' aufgewickelt. Die Papiere 3, 4, 5, 6, 7, 8 werden in diesem Fall als endlose Papierbahnen vor der Presse 100 zugeführt. Gleichzeitig werden der Strukturgeber 1 und die Folie 2 von zwei Rollen 31, 32 abgewickelt und zusammen mit den endlosen Papierbahnen 5, 6, 7 von Rollen 35 in die Contipresse 100 eingeführt.

Das Dekor kann mittels eines Scanners 210 abgescannt werden. Die gescannten Daten werden in einem Computer 200 verarbeitet und können zur Steuerung 220 des Druckers beim Aufbau der positiven Strukturen 9 Verwendung finden. Der Scanner 210 und der Drucker 220 können über den Computer 200 miteinander verbunden sein. Bei dieser Ausgestaltung ergibt sich vorteilhaft, dass beispielsweise die Maserung 12 eines Holzdekors praktisch 1:1 umgesetzt wird zu der positiven Struktur 9, sodass die Erzeugung einer "Synchronpore", also der Übereinstimmung von Struktur 9 und Maserung 12 passgenau erfolgt, sehr einfach realisierbar ist.

### Bezugszeichenliste

- 1: Strukturgeber
- 2: Folie
- 3: Papierlage/Overlay
- 4: Papierlage
- 5: Papierlage/Kraftpapier
- 6: Papierlage/Kraftpapier
- 7: Papierlage/Kraftpapier
- 8: Papierlage/Gegenzug
- 9: Struktur
- 10: Pressplatte
- 11: Pressplatte
- 12: Maserung
- 31: Rolle
- 31': Rolle
- 32: Rolle
- 32': Rolle
- 33: Rolle
- 34: Rolle
- 35: Rolle
- 100: Presse
- 200: Computer
- 210: Scanner
- 220: Drucker

## Patentansprüche

1. Verfahren zur Herstellung eines Hochdrucklaminats (HPL) bestehend aus einem Aufbau aus harzgetränkten Papierlagen (3, 4, 5, 6, 7, 8), von denen mindestens eine Lage (4) ein Dekor aufweist, die darüber angeordnete Lage (3) transparent aushärtet und der Aufbau in einer Presse zu einem Laminat gewünschter Dicke verpresst wird, **dadurch gekennzeichnet, dass** unter Verwendung eines Strukturgebers (1), bestehend aus einem Trägermaterial mit einer darauf im 3D-Druck aufgebrachten positiven Struktur (9), in die oberste Papierlage (3) eine negative Struktur eingepresst wird und während des Verpressens zwischen dem Strukturgeber (1) und der obersten Papierlage (3) eine Folie (2) zur Einstellung des Glanzgrades des gepressten Laminats angeordnet ist, die nach dem Verpressen mit dem Strukturgeber (1) entfernt wird.

2. Verfahren nach Anspruch 1, **dadurch gekennzeichnet, dass** die Folie (2) aus Polypropylen besteht und auf ihrer dem Aufbau zugewandten Seite eine Beschichtung aus Silikon aufweist.

3. Verfahren nach Anspruch 1 oder 2, **dadurch gekennzeichnet, dass** der Strukturgeber (1) so dünn ist, dass er auf eine Rolle aufwickelbar ist.

4. Verfahren nach Anspruch 3, **dadurch gekennzeichnet, dass** der Strukturgeber (1) eine Metall- oder Kunststofffolie oder eine Papier- oder HPL-Bahn ist.

5. Verfahren nach einem der vorstehenden Ansprüche, **dadurch gekennzeichnet, dass** die eingepresste Struktur zu dem Dekor korrespondiert.

6. Verfahren nach Anspruch 5, **dadurch gekennzeichnet, dass** das Dekor ein Holzdekor ist.

7. Verfahren nach Anspruch 5, **dadurch gekennzeichnet, dass** das Dekor ein Stein- oder Fliesendekor ist.

## Claims

1. Method for producing a high-pressure laminate (HPL) consisting of a structure of resin-impregnated paper layers (3, 4, 5, 6, 7, 8) , of which at least one layer (4) has a decoration, the layer (3) located there above is cured to be transparent and the structure is pressed in a press to form a laminate of desired thickness, **characterized in that** by using a structure enhancer (1) consisting of a carrier material with a positive structure (9) applied thereto in 3D printing, a negative structure is pressed into the uppermost paper layer (3) and during pressing a film (2) for adjusting the gloss level of the pressed laminate is arranged between the structure enhancer (1) and the uppermost paper layer (3), and is removed after pressing with the structure enhancer (1).

2. Method according to Claim 1, **characterized in that** the film (2) consists of polypropylene and has a silicone coating on its side facing the structure.

3. Method according to Claim 1 or 2, **characterized in that** the structure enhancer (1) is so thin that it can be wound onto a roll.

4. Method according to Claim 3, **characterized in that** the structure enhancer (1) is a metal or plastic film or a paper or HPL web.

5. Method according to one of the preceding claims, **characterized in that** the pressed-in structure corresponds to the decoration.

6. Method according to Claim 5, **characterized in that** the decoration is a wood decoration.

7. Method according to Claim 5, **characterized in that** the decoration is a stone or tile decoration.

## Revendications

1. Procédé de fabrication d'un stratifié haute pression (HPL) constitué par une structure de couches de papier (3, 4, 5, 6, 7, 8) imprégnées de résine, dont au moins une couche (4) présente un décor, la couche (3) agencée au-dessus est durcie de façon transparente, et la structure est pressée dans une presse pour donner un stratifié d'épaisseur désirée, **caractérisé en ce qu'**en utilisant un élément structurant (1) constitué par un matériau porteur pourvu d'une structure positive (9) appliquée par impression 3D sur celui-ci, on presse une structure négative dans la couche de papier supérieure (3), et pendant le pressage on agence un film (2) entre l'élément structurant (1) et la couche de papier supérieure (3) pour régler le degré de brillance du stratifié pressé, film que l'on enlève après le pressage avec l'élément structurant (1).

2. Procédé selon la revendication 1, **caractérisé en ce que** le film (2) est constitué en polypropylène et présente un revêtement en silicone sur sa face tournée vers la structure.

3. Procédé selon la revendication 1 ou 2, **caractérisé en ce que** l'élément structurant (1) est si mince qu'il est enroulable sur un rouleau.

4. Procédé selon la revendication 3, **caractérisé en ce que** l'élément structurant (1) est un film en métal ou en matière plastique ou bien une bande de papier ou de HPL.

5. Procédé selon l'une des revendications précédentes, **caractérisé en ce que** la structure enfoncée par pressage correspond au décor.

6. Procédé selon la revendication 5, **caractérisé en ce que** le décor est un décor de bois.

7. Procédé selon la revendication 5, **caractérisé en ce que** le décor est un décor de pierre ou de carrelage.
